# FASCICULE DE BREVET EUROPEEN

(11) **EP 0 447 278 B1**
(45) Date de publication et mention de la délivrance du brevet: **20.09.2000**
(21) Numéro de dépôt: 91400403.1
(22) Date de dépôt: 15.02.1991
(51) Int. Cl.: G06F 3/147, A47F 10/02, G06K 17/00, H04B 5/00

(54) **Installation pour commander à distance l'affichage des prix dans un magasin**
Anlage zur Fernsteuerung von Preisanzeigen in einem Geschäft
Installation for remote control of price displays in a shop

(30) Priorité: 16.02.1990 FR 9001904
(43) Date de publication de la demande: 18.09.1991
(60) Demande divisionnaire: 99203753.1
(73) Titulaire: STORE ELECTRONIC SYSTEMS ELECTRONIC SHELF LABEL, 95870 Bezons (FR)
(72) Inventeur: Houdou, Michel, F-49000 Angers (FR); Morineau, Jacques, F-49125 Tierce (FR)
(74) Mandataire: Schrimpf, Robert

(56) Documents cités:
- EP-A- 0 337 283
- WO-A-83/00251
- WO-A-86/02477
- DE-A- 3 742 707
- FR-A- 2 604 315
- GB-A- 2 087 614
- GB-A- 2 196 766
- US-A- 4 002 886
- US-A- 4 521 677
- US-A- 4 766 295

## Description

La présente invention concerne d'une façon générale l'affichage d'information, en particulier de prix ou analogues dans des magasins de vente au détail, ou encore de données de stock et analogues, et elle concerne plus particulièrement une nouvelle installation comportant une pluralité de modules d'affichage ou étiquettes électroniques pouvant être commandés à distance, pour afficher des données variables.

On connait déjà dans la technique antérieure un certain nombre d'installations de ce type.

Dans la plupart des installations connues, les étiquettes électroniques sont reliées à un ordinateur central de commande via une liaison par fils de type "bus", comprenant typiquement un fil d'alimentation pour les circuits électroniques des étiquettes et un ou plusieurs fils pour la transmission des données entre l'ordinateur et les étiquettes.

Du fait de la présence de ces câbles, ces installations sont malcommodes à utiliser, coûteuses et peu fiables. En outre, elles compliquent grandement les opérations de réagencement des magasins, car il faut alors se préoccuper de modifier les trajets de câbles pour les adapter au nouvel aménagement.

On connaît par ailleurs, notamment par le brevet FR-A-2604315 une installation conforme au préambule de la revendication 1.

La présente invention vise à proposer une installation d'affichage de prix par commande à distance dans laquelle chaque étiquette présente une autonomie importante, tout en pouvant sélectivement communiquer sans recours à des moyens spécifiques compliqués ou coûteux avec un terminal portable.

Ainsi l'invention propose une installation telle que définie dans la revendication 1.

Des aspects préférés de l'installation sont définis dans les sous-revendications 2 à 8.

Enfin l'invention vise un terminal portable capable d'être mis en oeuvre dans l'installation de la revendication 1.

Ainsi elle propose un terminal portable tel que défini dans la revendication 9.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est une vue d'ensemble schématique d'une installation de modules d'affichage selon la présente invention,
la figure 2 est un schéma-bloc d'un premier sous-ensemble d'une première partie de l'installation,
la figure 3 est un schéma-bloc d'un second sous-ensemble de ladite première partie,
la figure 4 est un schéma général d'une seconde partie de l'installation,
la figure 5 est un schéma-bloc d'un sous-ensemble de ladite seconde partie,
la figure 6 est un schéma général d'une troisième partie de l'installation,
la figure 7 est un schéma-bloc d'un sous ensemble de ladite troisième partie, et
la figure 8 est un chronogramme illustrant le fonctionnement de l'installation.

On indiquera tout d'abord que, d'une figure à l'autre, des éléments ou parties identiques ou similaires sont désignés par les mêmes numéros de référence.

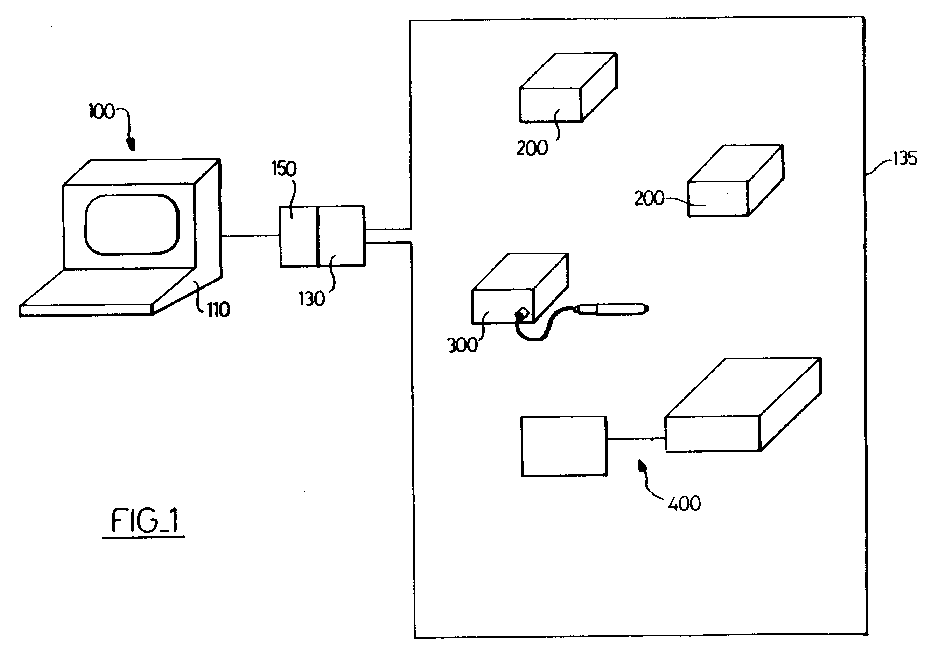

En référence tout d'abord à la figure 1, on a représenté une installation conforme à la présente invention, qui est destinée à être installée par exemple dans un supermarché d'alimentation. Elle comprend une unité centrale 100, comportant globalement un calculateur 110, un dispositif 130 d'émission de données par voie magnétique à l'aide d'une boucle de courant 135, ainsi qu'un dispositif 150 de gestion de l'émission, intercalé entre le calculateur et l'émetteur 130.

La boucle 135 est réalisée soit sous forme d'une boucle unique, comme illustré, soit sous la forme d'un ensemble de boucles, de manière à couvrir toute l'étendue du local dans lequel des dispositifs destinataires des données émises, qui seront décrits en détail plus loin, sont susceptibles de se trouver.

Ces dispositifs consistent en des modules individuels d'affichage ou étiquettes électroniques, indiqués en 200, qui sont capables à l'aide d'un circuit de réception approprié de recevoir les données émises par l'unité centrale, et plus généralement d'être paramétrées de manière à afficher sur un panneau par exemple à cristaux liquide des données de prix bien déterminées et modifiables concernant les produits auxquels elles sont associées. Le nombre d'étiquettes 200 est choisi bien entendu en fonction du nombre de références que comporte le magasin, et peut être par exemple de quelques milliers.

L'installation comporte en outre un ou plusieurs terminaux portables 300, qui sont capables notamment de lire des codes-à-barres présents sur des produits et d'entrer en communication avec des étiquettes, de façon individuelle, pour paramétrer celles-ci notamment en y introduisant des données d'identification et de prix.

Enfin l'installation peut comporter, de façon facultative, un dispositif d'émulation 400 qui est apte à recevoir les données envoyées par l'unité centrale et/ou par un terminal portable et de fournir des indications quant au fonctionnement des divers moyens d'échange de données, à des fins de test et de diagnostic de l'installation.

Comme on le verra dans le détail par la suite, les deux fonctions principales de l'installation sont les suivantes : elle permet d'une part d'"initialiser" chaque étiquette électronique 200 à l'aide d'un terminal portable 300, fonction qui consiste à introduire dans une mémoire sauvegardée de ladite étiquette son identificateur, de préférence obtenu directement par lecture du code à barres du produit, et le cas échéant à introduire également des données de prix, et d'autre part de pouvoir mettre à jour à tout instant les données de prix affichées par les étiquettes, sous le contrôle de l'ordinateur central 100 et via les moyens d'émission/réception par couplage magnétique.

On va maintenant décrire dans le détail les divers éléments constitutifs de l'installation de l'invention.

### Unité centrale

L'unité centrale 100 comporte pour l'essentiel un calculateur 110, un émetteur fixe 130 et un gestionnaire d'émission 150.

Le calculateur peut être de type classique, et ne sera pas décrit en détail.

Typiquement, il contient dans une mémoire des données relatives à chaque produit référencé, identifié par exemple directement à l'aide de son code propre tel qu'il figure sous forme de code-à-barres sur le produit lui-même, ces données étant par exemple des données de prix par article, de prix par unité de poids ou de volume, de stock restant, etc...

Selon un aspect avantageux de l'invention, la transmission des données destinées à modifier l'affichage des étiquettes à partir de l'unité centrale s'effectue par voie hertzienne à très basse fréquence, l'émetteur consistant en une boucle de courant 135 accordée sur la fréquence de transmission par une capacité appropriée 136.

Il en résulte que les informations sont transmises pour l'essentiel sous forme d'un champ magnétique variable, la transmission s'effectuant par couplage magnétique entre la boucle d'émission 135, conçue de manière à couvrir l'ensemble du magasin, et des boucles de réception prévues respectivement dans les modules électroniques.

Les avantages d'une telle solution sont nombreux:
- l'onde émise tend à rester confinée à l'intérieur de la boucle;
- la proximité éventuelle de masses métalliques a peu d'influence sur le champ reçu par les étiquettes;
- une perturbation ou un brouillage volontaires de la transmission demandent des moyens d'une puissance considérable;
- la fréquence étant faible, la consommation et le prix de revient des récepteurs sont fortement réduits.

On opère avantageusement à une fréquence comprise entre environ 10 kHz et 150 kHz, de façon préférée de l'ordre de 30 à 50 kHz et de façon encore plus préférée de 35 à 45 kHz. De telles fréquences permettent de satisfaire au débit numérique exigé pour la liaison unité centrale/étiquettes électroniques.

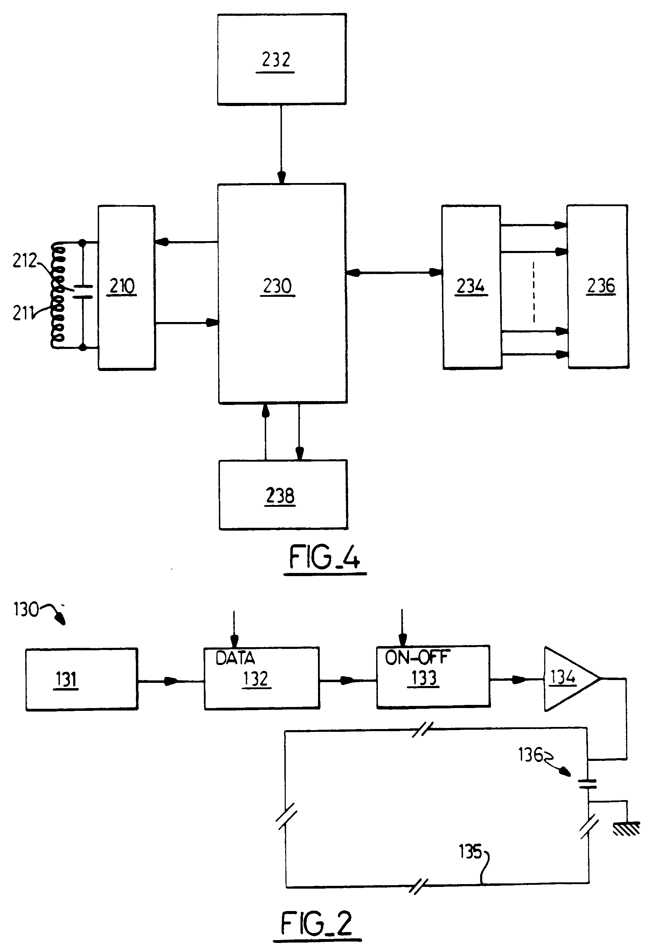

Avantageusement, la transmission des signaux s'effectue par modulation de fréquence (modulation dite "FSK"). Concrètement, et maintenant en référence à la figure 2, une telle modulation peut être effectuée par division de la fréquence d'un oscillateur à quartz 131 à l'aide d'un diviseur à rang variable 132. Ce diviseur 132 peut être suivi comme illustré, par un autre diviseur de rang constant 133 dont la sortie attaque une boucle de courant 135, associée à un condensateur d'accord 136 et formant antenne d'émission, par l'intermédiaire d'un amplificateur basse-fréquence 134 de puissance appropriée, intégrant un filtre actif passe-bande.

Si la sortie du diviseur 133 délivre des signaux parfaitement carrés, le filtrage en est sensiblement simplifié puisque le signal ne contient alors aucune harmonique de rang pair.

Par exemple, on peut utiliser un oscillateur à quartz d'une fréquence de l'ordre de 3 à 3,5 MHz, un diviseur 132 qui divise la fréquence du quartz par 10 ou par 11, selon le niveau logique du signal à transmettre qui est appliqué sur son entrée DATA, et une division par 8 en 133. Les fréquences haute et basse du signal modulé en FSK émis sont donc situées de part et d'autre d'une fréquence centrale comprise entre environ 35,7 et 41,6 kHz, selon la fréquence choisie pour le quartz 131.

De façon préférée, le diviseur à rang variable 132 est réalisé sous la forme d'un décompteur dont on vient prépositionner la valeur du compte à rebours à l'une ou l'autre des deux valeurs de diviseur, selon le niveau logique présent sur l'entrée DATA.

Par ailleurs, le second diviseur 133 comporte avantageusement une entrée de blocage ON/OFF, utilisable pour arrêter l'émission sans qu'il soit nécessaire d'intervenir sur les signaux de forte puissance en aval de l'amplificateur 134.

L'émetteur décrit ci-dessus est géré par un dispositif 150 associé au calculateur 100 et dénommé "gestionnaire de boucle".

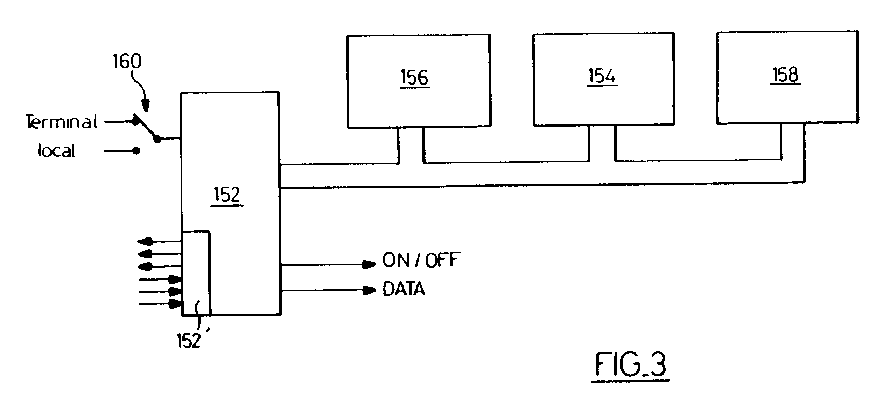

De façon préférée, et maintenant en référence à la figure 3, ce gestionnaire est articulé autour d'un micro-processeur 152 qui reçoit d'un côté les informations provenant du calculateur 110 et qui, de l'autre côté, envoie ces informations vers l'émetteur de boucle 130 (lignes DATA et ON/OFF).

Pour l'essentiel, le rôle du gestionnaire de boucle est de recevoir de l'ordinateur 110 les informations à émettre sous un format prédéfini, par exemple selon la norme V24, via une interface 152′ par exemple de type RS232C, de les mémoriser dans une mémoire tampon 154 et de les appliquer à l'émetteur 130 en respectant un protocole bien déterminé que l'on va décrire plus bas. Le programme qui gère le fonctionnement du gestionnaire 150 est contenu dans une autre mémoire 156, tandis qu'une mémoire additionnelle 158 contient des séquences automatiques utilisables à des fins de test. A cet égard, un commutateur 160 peut être prévu pour faire passer le système d'un mode dit "terminal", dans lequel le gestionnaire exécute les ordres reçus de l'ordinateur 110 via la ligne RS232C, et un mode dit "local", dans lequel le gestionnaire peut fonctionner sans être relié à un ordinateur, en exécutant les séquences automatiques de test précitées.

### Etiquette

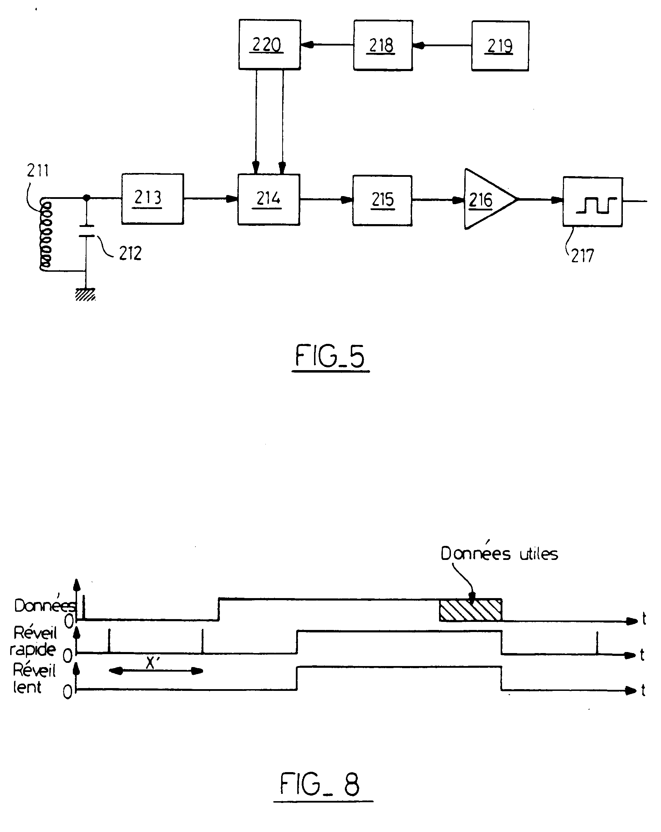

Maintenant en référence aux figures 4 et 5, chaque module électronique 200 comprend un circuit récepteur 210 qui comporte comme collecteur d'onde un cadre 211 accordé par un condensateur 212 sur la fréquence de transmission mentionnée plus haut. Ce cadre est relié à un filtre passe-bande 213, dont la sortie attaque un mélangeur 214 du type à commutation.

Il est prévu en outre un filtre 215 suivi par un amplificateur à gain élevé 216 monté en boucle ouverte; deux diodes tête-bêche peuvent être placées en contreréaction pour éviter la saturation.

L'amplificateur 216 est suivi d'un amplificateur écrêteur 217 qui amène les signaux à un niveau compatible avec les circuits logiques situés en aval.

Les oscillateurs locaux sont engendrés par division par quatre à partir d'une fréquence égale à quatre fois la fréquence à recevoir, qui est elle-même obtenue par divisions successives en 218 d'une référence délivrée par un oscillateur à quartz 219 résonnant par exemple à environ 5 MHz. Le diviseur par quatre 220 comprend par exemple deux bascules "D" bouclées de manière à délivrer deux ondes en quadrature. Ces deux ondes attaquent le mélangeur 214.

En variante, on peut utiliser pour le récepteur de l'étiquette un système à boucle à verrouillage de phase ("PLL") basé par exemple sur un circuit intégré de type XR-2211 commercialisé par la société Raytheon.

De retour à la figure 4, l'étiquette 200 comprend en outre un microprocesseur 230 qui est cadencé par une horloge 232 et qui gère un afficheur à cristaux liquides 236 par l'intermédiaire d'un microcontrôleur spécifique 234. De préférence, l'afficheur 236 comporte une première zone destinée à afficher le prix par article auquel l'étiquette est associée, et une seconde zone, préférentiellement plus petite, destinée à afficher le prix par unité de poids, de volume, etc.

Le microprocesseur 230 est choisi préférentiellement de manière à répondre aux critères suivants :
- consommation électrique faible,
- coût réduit,
- temps de cycle adapté à la vitesse de transmission des données, par exemple de l'ordre de 600 bauds,
- nombre d'entrées/sorties (en dehors des lignes de commande de l'afficheur) suffisamment nombreuses, et par exemple de l'ordre de 6.

Comme on le verra plus loin, les fonctions principales du module électronique sont :
- la réception et la mémorisation, dans une mémoire vive sauvegardée intégrée au microprocesseur, d'un code d'identification du module;
- la réception et la reconnaissance de données de prix destinées en particulier à ce module, et
- l'affichage desdites données.

Ces fonctions sont réalisées à l'aide d'un programme contenu dans une mémoire 238 associée au microprocesseur 230 et qui peut mémoriser également les informations reçues.

L'antenne de réception ou collecteur d'ondes 211 est conçu en fonction des impératifs suivants:
- sa taille doit être restreinte;
- il doit être peu coûteux;
- il doit être efficace.

Cela étant, pour assurer que la tension recueillie soit maximale, on donnera aux enroulements la taille maximale, en restant dans les limites du boîtier du module d'affichage.

Par ailleurs, dans le but également d'acrroître la tension recueillie et/ou de limiter le nombre de spires de l'enroulement, on choisit de préférence un noyau de ferrite dont la permittivité relative est la plus élevée possible.

### Terminal portable

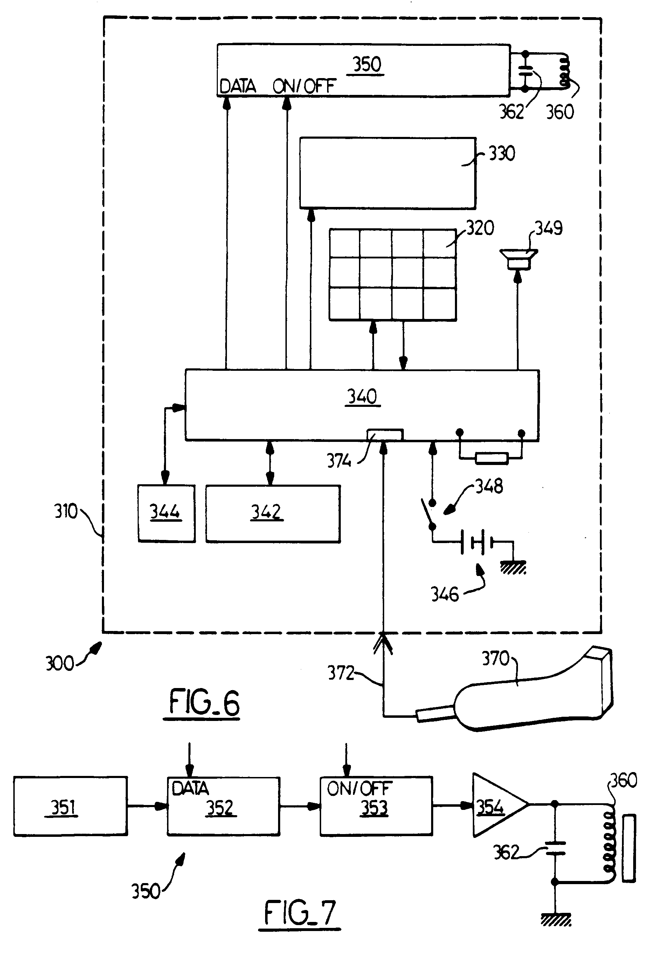

En référence maintenant aux figures 6 et 7, le terminal portable 300 comprend un boîtier 310 abritant un clavier 320 et un afficheur alphanumérique 330 par exemple à cristaux liquides.

Par exemple, le clavier 320 comprend seize touches, soit dix touches numériques, une touche "virgule", une touche d'annulation et quatre touches de fonctions.

L'afficheur 330 est par exemple un afficheur à deux lignes de seize caractères.

Un microprocesseur 340 est reliée par des ports d'entrée/sortie appropriés à l'afficheur 330 et au clavier 320. Il est également relié à un circuit d'émission 350 comportant les circuits appropriés de modulation et d'amplification et dont la sortie est reliée à une bobine d'émission 360 formant boucle de courant, accordée par une capacité 362. Une mémoire morte 342, par exemple de type "EEPROM", est connectée au microprocesseur par des bus appropriés et contient le programme qui régit le fonctionnement du terminal ainsi que des données pré-programmées. Une mémoire vive 344 est également prévue pour contenir les données destinées à être envoyées aux étiquettes (donnée d'identification et données de prix notamment). Une batterie d'alimentation 346 est reliée au système par un interrupteur marche-arrêt 348. Un avertisseur sonore 349, par exemple un vibreur, est également prévu à des fins expliquées plus loin.

Enfin un dispositif de lecture optique de codes-à-barres, par exemple un appareil lecteur couramment appelé "douchette" 370 ou encore un crayon optique, est relié au microprocesseur 340 par un câble 372 et une interface appropriée 374.

Le circuit d'émission 350 va maintenant être décrit en référence à la figure 7.

Cet émetteur doit rayonner une puissance électromagnétique relativement faible, car il faut éviter que, lors de l'initialisation ou de la modification d'une étiquette, les étiquettes voisines réagissent.

La modulation est effectuée par exemple selon le même principe que pour l'émetteur 130 associé à l'unité centrale, à savoir par division de la fréquence d'un oscillateur à quartz 351 à l'aide d'un diviseur à rang variable 352. Ce diviseur 352 peut être suivi comme illustré, par un autre diviseur de rang constant 353 dont la sortie attaque la bobine-cadre d'émission 360, associée au condensateur d'accord 362, par l'intermédiaire d'un amplificateur 354.

Un tel circuit est apte à délivrer les mêmes fréquences que le circuit décrit en référence à la figure 2, et présente les mêmes avantages.

Avantageusement, l'amplificateur 354 est constitué par un simple transistor NPN monté en émetteur commun, auquel est associée une diode permettant d'éviter que les deux bornes de la bobine ne soient court-circuitées lorsque le transistor entre en saturation.

Le transfert de données du terminal portable vers un module d'affichage 200 s'effectue en approchant l'antenne d'émission du terminal de l'antenne de réception du module, pour assurer un couplage magnétique satisfaisant.

Concrètement, avec une tension d'alimentation continue de +6 volts, on a pu obtenir une puissance suffisante pour réaliser le transfert d'informations vers une étiquette située à environ 5 cm du cadre du terminal portable.

Optionnellement, le terminal portable 300 peut comporter des moyens pour mémoriser toutes les opérations d'initialisation et de modification des étiquettes, telles qu'elles vont être décrites ci-dessous, en vue de fournir à l'ordinateur central, via une liaison par fils ou par couplage électromagnétique, des compte-rendus des opérations effectuées.

Le terminal, par conception appropriée du programme contenu dans sa mémoire morte 342, peut offrir par exemple les fonctions ci-dessous, qui sont présentées dans un menu principal à la mise sous tension du terminal:
- affichage du code-à-barres déjà mémorisé dans la mémoire vive du terminal portable pour vérification;
- entrée manuelle d'une valeur numérique égale au rapport prix au kilo/prix par article ou prix au litre/prix par article; cette opération peut se faire soit par appel sélectif d'une valeur parmi un ensemble de valeurs préalablement mémorisées, soit encore par l'entrée de la valeur au clavier; dans tous les cas, une validation doit être effectuée après le choix, par appui d'une certaine touche de fonction du clavier 320;
- entrée du prix de l'article à l'aide des touches numériques et de la touche "virgule" du clavier 320, avec correction des éventuelles erreurs par la touche d'annulation et validation finale par enfoncement d'une certaine touche de fonction;
- programmation de l'étiquette, c'est-à-dire chargement de données dans celle-ci; dans ce cas, un menu secondaire permet de choisir l'une des quatre fonctions suivantes:
   - PROG: permet la programmation dans l'étiquette de son identificateur (le code à barres lu) et du rapport prix au kilo (ou au litre)/prix par article;
   - PRIX: permet la programmation du prix de l'article; le prix apparaît alors sur l'afficheur 236 de l'étiquette, ainsi que le rapport précité si la fonction PROG a déjà été exécutée;
   - OFF: permet l'extinction de l'afficheur 236 de l'étiquette, afin de réduire sa consommation pendant les périodes de non-utilisation;
   - ON: permet de rétablir l'affichage.

Il est à noter que la fonction de lecture et de mémorisation du code à barres n'est pas présente dans le menu principal; en effet, cette fonction est remplie automatiquement; plus précisément, dès qu'une lecture de code à barres est effectuée par l'opérateur, un signal d'interruption ou analogue fait alors passer le microprocesseur en mode de réception et de mémorisation dudit code, qui est également affiché pour vérification. Cette procédure provoque également, de façon préférée, la remise à zéro des valeurs de prix et de rapport prix au kilo (ou au litre)/prix par article dans la mémoire vive 344 du terminal portable.

Il est à noter que les fonctions PROG, PRIX, OFF et ON du menu secondaire précité ne peuvent entrer en jeu qu'après que l'opérateur a rapproché le terminal portable suffisamment près de l'étiquette dont les données sont à modifier, par exemple à moins de 20 cm.

Et le transfert de données du terminal vers l'étiquette s'effectue en deux temps; tout d'abord a lieu la phase de réveil de l'étiquette, comme on va la décrire en détail plus loin, au cours de laquelle ladite étiquette indique sur son afficheur pendant courte une durée déterminée "CHARGEMENT ETIQUETTE"; suit alors la phase de transfert des données proprement-dite, pendant laquelle le message ci-dessus est affiché en permanence, tandis que l'avertisseur sonore 349 est activé.

A la fin du transfert, le terminal portable 300 se replace dans son état de départ, dans lequel l'avertissement sonore est arrêté le menu principal est affiché. Ce n'est qu'alors que le terminal portable peut être éloigné de l'étiquette.

### Réveil des étiquettes

Les données sont envoyées à chaque étiquette par l'unité centrale 100 ou par un terminal portable 300 selon un mode asynchrone. Une étiquette ne peut donc connaître à l'avance l'instant auquel un message (appelé par la suite "télégramme") va lui être adressé.

Mais pour des raisons liées à la consommation électrique, il est impossible que le récepteur de chaque module d'affichage soit constamment en état de veille.

Conformément à un aspect avantageux de la présente invention, la solution consiste à ne "réveiller" le récepteur de chaque module 200 que périodiquement, ledit récepteur devenant alors pendant une durée déterminée à l'écoute d'éventuels messages destinés au module associé. Concrètement, ce réveil périodique, toutes les X secondes et pendant une durée t, est réalisé par un cadencement approprié de la mise en- et hors-circuit du récepteur 210, réalisé par microprocesseur 230 du module 200.

Du côté de l'émetteur, et plus précisément du gestionnaire d'émission 150, chaque envoi de télégrammes à destination des modules d'affichage est précédé par un signal de réveil dont la durée est au moins égale à X secondes, afin de s'assurer que chaque récepteur 210 se détecte au moins une fois la présence du signal de réveil. Dans ce cas, le récepteur 210 se maintient à l'état de réveil pendant une durée donnée lui permettant de recevoir les données provenant de l'unité centrale.

Concrètement, on choisit pour une sécurité maximale une durée du signal de réveil égale à 2.X secondes.

La période X n'est pas simplement choisie de façon à être aussi longue que possible; en effet, on peut démontrer que, si n est le nombre moyen de messages émis par heure à destination d'un module d'affichage donné, et si le temps t sus-mentionné est de 0,1 seconde, la période optimale X pour minimiser la consommation du récepteur 210 est de l'ordre de √(240/n).

Dans une première variante de cette caractéristique de la présente invention, pour minimiser encore la durée pendant laquelle le récepteur 210 est en éveil, on incorpore à chaque signal de réveil émis par l'unité centrale des messages de comptes à rebours, et plus précisément des données numériques indiquant le temps qui reste à s'écouler avant que les données utiles du télégramme n'arrivent.

Par exemple, on peut utiliser dans le signal de réveil de durée 2.X secondes 8 messages de compte à rebours, par exemple codés numériquement sur trois ou quatre bits, espacés régulièrement de 2.X/9 secondes au sein du signal de réveil.

De cette manière, lorsque le circuit de réception d'une étiquette est activé, il peut déterminer à partir de la valeur de compte-à-rebours courante reçue le temps qui va s'écouler avant que le flot de données proprement dites arrive. Le circuit de réception peut donc être désactivé jusqu'à cette arrivée. De cette manière, on minimise encore la durée pendant laquelle le circuit de réception est actif et l'on accroît la durée de vie de la pile.

Avec les valeurs ci-dessus, on peut démontrer que la consommation du récepteur est minimisée si l'on choisit X égal à environ √(6480/n).

On peut démontrer également que, dès que X est supérieur à 10 secondes, la consommation globale obtenue est égale ou inférieure à 1/10ème de la consommation globale sans compte à rebours.

En pratique, en prenant comme hypothèse un magasin contenant 15000 articles et donc 15000 modules d'affichage, dont les valeurs affichées doivent être remises à jour toutes les nuits, et en supposant également que l'unité centrale envoie au cours d'une nuit 150 télégrammes contenant chacun des données pour 100 modules d'affichage, et qu'un même envoi doit être répété trois fois pour s'assurer de sa bonne réception, on peut démontrer que la période X optimale est alors d'environ 37 secondes.

Dans ce cas, les signaux de réveil émis par l'unité centrale préalablement à tout envoi de données ont une durée de 74 secondes, et sont ponctués toutes les 8,2 secondes d'un message de compte-à-rebours.

Bien entendu, les données ci-dessus ne doivent pas être considérées comme limitatives.

Si la durée indiquée ci-dessus ne pose pas de problème pour une transmission d'informations transparente vis-à-vis des utilisateurs de l'installation, c'est-à-dire entre l'unité centrale et les modules, elle s'avère excessive pour une transmission d'informations d'un terminal portable 300 vers un module d'affichage 200, c'est-à-dire essentiellement dans le cadre de la programmation ou initialisation du module d'affichage.

Ainsi, selon un autre aspect de l'invention, on peut prévoir un moyen de réveil rapide de chaque module.

Dans ce cas, le circuit récepteur 210 de chaque étiquette est pourvu d'un circuit de détection d'un émetteur proche, par exemple sous la forme d'un circuit à seuil qui reçoit après traitement la tension recueillie par l'antenne de réception, et qui avertit le microprocesseur.

Le principal critère est ici le temps d'accès, et l'on peut concevoir le terminal portable pour qu'il émette un signal de réveil rapide d'une durée par exemple de deux secondes. Concrètement, le microprocesseur 230 est dans ce cas conçu pour activer selon une période X′ déterminée le circuit de détection, et pour amener le récepteur 210 en éveil lorsque l'émission d'un signal de réveil rapide par le terminal portable et détectée. En pratique, on peut choisir X′ environ égale à 800 ms.

Comme on le verra plus loin, cette fonction de réveil rapide, qui accroît la consommation en courant des circuits du module d'affichage, pourra avantageusement être inhibée automatiquement (par exemple la nuit et les jours de fermeture du magasin) à partir de l'unité centrale 100. En variante, la fonction de réveil rapide peut être inhibée en permanence, auquel cas l'accès au module d'affichage considéré depuis le terminal portable ne peut se faire qu'après avoir demandé expressément à l'ordinateur central d'annuler cette inhibition.

### Protocole de transmission

On peut distinguer plusieurs sortes de messages:
a) des messages de programmation des modules, incluant bien évidemment l'initialisation d'un module.
b) des messages de données. De façon préférée, chaque télégramme envoyé par l'émetteur central 130 comprend un ensemble de messages de données, et chaque message comprend un champ d'adresse et un champ de données. Le champ d'adresse est typiquement l'identificateur d'un module d'affichage, à savoir la donnée indiquée sous forme de code-à-barres sur le produit associé. Le champ de données comprend typiquement un prix par article ou un prix par unité de poids ou de volume.
c) des messages de caractérisation. Selon un autre aspect de l'invention, pour éviter que le récepteur 210 de chaque module d'affichage reste actif pendant toute la durée (qui peut être relativement longue) d'un télégramme, on peut faire précéder le corps d'un télégramme par un message dit de caractérisation comprenant par exemple les N premiers chiffres des identificateurs des modules concernés par ce télégramme. Ainsi l'étape de réveil d'un module déterminé est suivie immédiatement d'une étape de mémorisation de ces N chiffres et de comparaison avec les N premier chiffres de l'identificateur du module considéré. Si la correspondance n'est pas établie, alors le microprocesseur 230 est conçu pour "rendormir" le module, pour ainsi minimiser sa consommation, et ce jusqu'au réveil suivant.
   En outre, au cours d'un même télégramme, on peut envoyer un ou plusieurs autres messages de caractérisation, constituant chacun une sous-famille des messages caractérisés au début du télégramme.
d) des messages de compte-à-rebours, comme indiqué plus haut.
e) des messages d'inhibition. Ces messages ont pour but essentiel de minimiser la consommation des étiquettes. On peut citer notamment:
   - les messages d'inhibition du réveil dit rapide, comme expliqué plus haut;
   - les messages d'extinction et d'allumage de l'afficheur à cristaux liquides du module (instructions OFF et ON mentionnées plus haut dans la description du terminal portable;
   - les messages d'endormissement des modules, permettant d'inhiber la fonction de réveil périodique lent pendant une durée donnée; plus précisément, à la réception d'un tel message, le microprocesseur 230 peut effectuer un décomptage à partir d'une valeur donnée, et ne recommencer à écouter des éventuels signaux de réveil émis par l'unité central que lorsque le décompte atteint zéro.

Les messages d'inhibition s'adressent en principe à toutes les étiquettes qui sont à l'écoute. Mais en utilisant un message de caractérisation approprié, on peut sélectionner les étiquettes pour lesquelles une inhibition donnée sera effective.

Pour différencier les types de message, on peut prévoir dans chaque message une entête représentative du type de message considéré.

De façon préférée, chaque message est constitué d'un certain nombre de mots, chaque mot étant par exemple codé sur quatre bits et accompagné de trois bits de détection d'erreurs (code de Hamming ou analogue), le tout étant encadré par un bit de début de mot et trois bits de fin de mot. La transmission peut s'effectuer à une vitesse de l'ordre de 600 bauds, et de préférence selon une période qui est un multiple de la période d'horloge du microprocesseur de module 230.

L'adresse d'un module d'affichage est définie par deux informations, à savoir l'adresse du magasin associé, codée par exemple sur trois mots, et l'identificateur mentionné plus haut (code-à-barres lu), codé par exemple sur treize mots. Il est à noter que l'utilisation d'une adresse spécifique pour chaque magasin permet d'éviter que des interférences n'aient lieu entre deux magasins très voisins.

Par ailleurs, pour éviter une utilisation frauduleuse de l'installation, on peut brouiller une partie des informations transmises, par exemple par combinaison logique de certains mots avec un mot-clé modifiable ou non, qui peut être chargé dans chaque module d'affichage par le terminal portable lors de l'initialisation.

Pour illustrer le fonctionnement de l'installation de la présente invention, on a illustré schématiquement sur la figure 8 un chronogramme correspondant au processus complet d'une programmation de module par le terminal portable, avec signal de réveil rapide et télégramme utile (zone hachurée).

L'ensemble du protocole tel que détaillé ci-dessus est réalisé par une programmation appropriée d'une part du gestionnaire d'émission 150 qui fait partie de la station centrale 100, de seconde part du microprocesseur 340 qui régit le fonctionnement du ou de chaque terminal portable 300, et de troisième part du microprocesseur 230 qui régit le fonctionnement de chaque étiquette électronique.

### Fonctionnement général

Comme on l'a indiqué plus haut, l'initialisation d'une étiquette 200 s'effectue à l'aide du terminal portable 300 , auquel on fait lire le code à barres du produit auquel l'étiquette doit être associée, et qui est ensuite connecté à l'étiquette, de la manière indiquée plus haut, pour y introduire cette donnée, constituant dorénavant le code d'identification de l'étiquette, ainsi que d'autres telles que prix unitaire, prix au kilo, etc.

La mise à jour des données affichées par les étiquettes (essentiellement prix) s'effectue par la suite soit grâce à une transmission de données par voie magnétique entre l'unité centrale et les étiquettes, soit encore grâce au terminal portable.

Grâce aux aménagements tels que décrits plus haut relativement aux transferts d'informations entre les divers éléments de l'installation, et à la nature des informations susceptibles d'être transférés, on peut donner aux modules d'affichage une autonomie très longue, sans qu'il soit nécessaire de fréquemment remplacer leurs piles.

Des essais ont à cet égard été effectués par la Demanderesse avec les conditions suivantes :
- extinction des afficheurs à cristaux liquides de tous les modules d'affichage la nuit, de 22 heures à 9 heures, et en fin de semaine, du samedi à 21 heures au lundi à 9 heures;
- inhibition permanente de la fonction de réveil rapide, cette fonction n'étant autorisée que sur ordre spécifique et ponctuel de la part de l'ordinateur central;
- endormissement (inhibition du réveil lent) de tous les modules d'affichage du samedi à 21 heures au lundi à 9 heures;
- mise à jour des affichages de 500 modules par jour, avec des télégrammes concernant chacun 20 modules, et un taux de rejet des modules non concernés grâce aux messages de caractérisation atteignant 90%, et un triple envoi de chaque message.

Ces essais ont permis d'obtenir une consommation annuelle de l'ordre de 80 mA/H, ce qui permet de donner à chaque module une autonomie de plusieurs années avec des piles de dimensions modestes, sans par ailleurs que le couplage magnétique avec la station centrale n'ait à être utilisé pour effectuer un apport d'énergie.

Bien entendu, la présente invention n'est nullement limitée à la forme de réalisation décrite ci-dessus et représentée sur les dessins, mais l'homme de l'art saura y apporter toute variante ou modification conforme à l'étendue de protection définie par les revendications.

Ainsi il n'est pas impératif que chaque étiquette comporte son propre circuit de réception et les moyens, notamment de réveil, associés. Plus précisément, on peut prévoir un circuit de réception unique pour un groupe d'étiquettes tel que l'ensemble des étiquettes associées à une tablette de rayonnage.

De plus, l'installation décrite ci-dessus peut être complétée si nécessaire par des moyens d'émission d'informations des étiquettes vers la station centrale. Ces moyens peuvent être prévus soit dans chaque étiquette, soit dans un circuit spécifique associé à un groupe d'étiquettes.

Comme on l'a précédemment indiqué, la présente invention peut être utilisée avantageusement pour l'affichage de prix de vente dans un magasin, ou encore pour l'affichage de données de stocks (notamment quantité restante, quantité minimale, etc.) sur des lieux de stockage, de façon modifiable à distance. Mais il est clair que l'invention est utilisable dès que des informations de type quelconque que l'on doit pouvoir modifier à distance sont à afficher en une pluralité d'emplacements délocalisés.

## Revendications

1. Installation comprenant une station centrale (100) et une pluralité de modules d'affichage (200) destinés chacun à présenter sur un afficheur des informations reçues de la station centrale, notamment pour l'affichage de prix dans un magasin, la station centrale comprenant des moyens d'émission (130) d'un rayonnement modulé conformément aux informations à transmettre, et l'installation comprenant, en association avec chaque module d'affichage ou groupe de modules d'affichage, un circuit de réception (210), et des moyens (230) pour activer seulement selon une période déterminée (X) et pendant une durée limitée le circuit de réception, et pour le maintenir, lorsqu'une émission par la station centrale est détectée pendant une phase d'activation, à l'état activé pendant au moins une partie de la durée pendant laquelle lesdites informations sont émises, le système comprenant en outre au moins un terminal portable (300) qui comporte des moyens pour engendrer des informations destinées à des modules d'affichage (200) et des moyens (350) d'émission d'un rayonnement modulé conformément aux informations à transmettre,
caractérisée en ce que les moyens d'émission de la station centrale et de chaque terminal portable comprennent une boucle de courant (135; 360) alimentée par un signal à basse fréquence, en ce que chaque module d'affichage ou groupe de modules d'affichage comporte une antenne de réception, en ce que chaque émission d'informations par la station centrale est précédée par l'émission d'un signal de réveil destiné à placer les circuits de réception à l'état activé dès le début de la transmission proprement-dite, et en ce que les informations sont transférées d'un terminal portable vers un module d'affichage de façon unidirectionnelle par couplage électromagnétique de proximité entre ladite boucle de courant (360) du terminal portable et l'antenne (211) du circuit de réception du module d'affichage.

2. Installation selon la revendication 1, caractérisée en ce que chaque terminal portable (300) comprend un clavier (320) et un écran d'affichage (330) pour l'entrée et l'affichage d'informations à destination d'un module d'affichage, et en ce que chaque terminal portable comporte en outre un lecteur optique de code-à-barres (370) et des moyens (340) pour initialiser un module d'affichage (200) en chargeant dans celui-ci en tant qu'identificateur, la valeur du code-à-barres préalablement lu sur un produit auquel le module est associé.

3. Installation selon l'une des revendications 1 et 2, caractérisée en ce qu'il est prévu en outre en association avec le circuit de réception de chaque module d'affichage ou groupe de modules d'affichage des moyens (230) pour activer selon une seconde période déterminée (X'), plus courte que la première (X), le circuit de réception (210) dans un mode de détection de proximité, et en ce que chaque émission d'informations par un terminal portable (300) est précédée par l'émission d'un signal de réveil rapide qui, lorsqu'il est détecté par le circuit de réception pendant une phase d'activation en détection de proximité de celui-ci, provoque son maintien à l'état activé pendant la durée pendant laquelle des informations sont émises par le terminal portable.

4. Installation selon la revendication 3,caractérisée en ce que la durée du signal de réveil rapide est de l'ordre du double de ladite seconde période (X').

5. Installation selon l'une des revendications 3 et 4, caractérisée en ce que la durée de ladite seconde période est comprise entre 0,2 et 5 secondes.

6. Installation selon l'une des revendications 1 à 5, caractérisé en ce que le circuit de réception de chaque module d'affichage comprend un détecteur à seuil.

7. Installation selon l'une des revendications 1 à 6, caractérisée en ce que la fréquence du signal basse fréquence est comprise entre environ 30 et 50 kHz.

8. Installation selon la revendication 7, caractérisée en ce que la fréquence du signal basse fréquence est comprise entre 35 et 45 kHz.

9. Terminal portable, destiné notamment à transférer des informations vers un module d'affichage desdites informations, notamment pour l'affichage de prix de vente dans un magasin, caractérisé en ce qu'il comprend:
- une unité centrale de traitement (340) à laquelle est associée une mémoire (342);
- des moyens d'entrée des informations comprenant un clavier (320) et un lecteur optique de codes-à-barres (370);
- un écran d'affichage (330) pour le contrôle desdites informations;
- un circuit d'émission des informations comprenant des moyens (350) pour moduler un signal à basse fréquence et pour l'appliquer à une boucle de courant (360); et
- des moyens pour émettre préalablement à l'émission d'informations un signal de réveil propre à activer un circuit de réception d'un module lorsque ladite boucle de courant est approchée en deçà d'une distance déterminée dudit module.

## Claims

1. Installation comprising a central unit (100) and a plurality of display modules (200) each adapted to show on a display information received from said central unit, in particular for displaying prices in a store, said central unit comprising transmission means (130) for radiation modulated according to the information to be transmitted, and the installation comprising, associated with each display module or group of display modules, a receive circuit (210), and means (230) for activating the receive circuit only at a predetermined period (X) for a limited duration, and for holding it in the active state for at least part of the duration for which said information is transmitted when transmission by the central unit is detected during an activation phase, the system further comprising at least one portable terminal (300) comprising means for generating information addressed to display modules (200) and means (350) for transmitting radiation modulated according to the information to be transmitted, characterized in that the transmit means of the central unit and of each portable terminal comprise a current loop (135; 360) fed with a low-frequency signal, in that each display module or group of display modules includes a receive antenna, in that each transmission of information by the central unit is preceded by the transmission of a reactivation signal adapted to place the receive circuits in the active state as soon as transmission as such begins, and in that the information is transferred from a portable terminal to a display module unidirectionally by close magnetic coupling between said current loop (360) of the terminal

2. Installation according to claim 1 characterized in that each portable terminal (300) comprises a keypad (320) and a display screen (330) for input and display of information to be sent to a display module and in that each portable terminal further comprises an optical bar code reader (370) and means (340) for initializing a display module (200) by transferring thereto, as an identifier, the value of the bar code previously read from a product with which said module is associated.

3. Installation according to either of claims 1 and 2 characterized in that there is further provided, in association with the receive circuit of each display module or group of display modules, means (230) for activating said receive circuit (210) in a proximity detection mode for a second specific period (X') shorter than said first period (X) and in that each transmission of information by a portable terminal (300) is preceded by the transmission of a fast reactivation signal which, when detected by said receive circuit during a proximity detection activation phase thereof, causes it to be held in the active state during the period in which said information is transmitted by the portable terminal.

4. Installation according to claim 3 characterized in that the duration of said fast reactivation signal is in the order of twice that of said second period (X')

5. Installation according to either of claims 3 and 4 characterized in that the duration of said second period is between 0.2 and 5 seconds.

6. Installation according to one of claims 1 through 5 characterized in that the receive circuit of each display module includes a threshold detector.

7. Installation according to one of claims 1 through 6 characterized in that the frequency of said low-frequency signal is between 30 and 50 kHz approximately.

8. Installation according to claim 7 characterized in that the frequency of said low-frequency signal is between 35 and 45 kHz.

9. Portable terminal, in particular for transferring information to a module for displaying said information, in particular for displaying selling prices in a store, characterized in that it comprises:
- a central processor unit (340) and an associated memory (342);
- data entry means comprising a keypad (320) and an optical bar code reader (370);
- a display screen (330) for checking said information;
- an information transmission circuit comprising means (350) for modulating a low-frequency signal and for applying it to a current loop (360); and
- means for transmittng, prior to data transmission, a reactivation signal adapted to activate a receive circuit of a module when said current loop is within a predetermined distance of said module.

## Patentansprüche

1. Anordnung mit einer Zentralstation (100) und eine Vielzahl von Anzeigemodulen (200), die jeweils dazu bestimmt sind, an einer Anzeige Informationen darzustellen, die von der Zentralstation empfangen werden, insbesondere zur Anzeige des Preises in einem Geschäft, welche Zentralstation Einrichtungen (130) zum Ausgeben einer Strahlung umfaßt, die nach Maßgabe der zu übertragenden Informationen moduliert ist, und die Anordnung in Verbindung mit jedem Anzeigemodul oder jeder Gruppe von Anzeigemodulen eine Empfangsschaltung (210) und Einrichtungen (230) umfaßt, um nur in einem bestimmten Zeitintervall (X) und während einer begrenzten Zeitdauer die Empfangsschaltung zu aktivieren und sie dann, wenn eine Ausgabe durch die Zentralstation während einer Aktivierungsphase erfaßt wird, im aktiven Zustand während wenigstens eines Teils der Zeitdauer zu halten, während der die besagten Informationen ausgegeben werden, welches System weiterhin wenigstens ein tragbares Terminal (300) umfaßt, das Einrichtungen zum Erzeugen der Informationen, die für die Anzeigemodule (200) bestimmt sind, und Einrichtungen (350) zum Ausgeben einer Strahlung umfaßt, die nach Maßgabe der zu übertragenden Informationen moduliert ist,
dadurch gekennzeichnet, daß die Ausgabeeinrichtungen der Zentralstation und jedes tragbaren Terminals eine Stromschleife (135; 360) umfassen, die mit einem niederfrequenten Signal versorgt wird, daß jeder Anzeigemodul oder jede Anzeigemodulgruppe eine Empfangsantenne umfaßt, daß jeder Ausgabe von Informationen durch die Zentralstation die Ausgabe eines bestimmten Wecksignals vorausgeht, um die Empfangsschaltungen in den aktiven Zustand vom Anfang der eigentlichen Übertragung an zu bringen, und daß die Informationen von einem tragbaren Terminal auf einen Anzeigemodul unidirektional über eine elektromagnetische Näherungskoppelung zwischen der Stromschleife (360) des tragbaren Terminals und der Antenne (211) der Empfangsschaltung des Anzeigemoduls übertragen werden.

2. Anordnung nach Anspruch 1, dadurch gekennzeichnete daß jedes tragbare Terminal (300) eine Tastatur (320) und einen Anzeigebildschirm (330) umfaßt, um Informationen zu einem Anzeigemodul einzugeben und anzuzeigen, und daß jedes tragbare Terminal weiterhin einen optischen Strichcodeleser (370) und Einrichtungen (340) zum Initialisieren eines Anzeigemoduls (200) umfaßt, indem in diesen als Identifikator der Wert des vorher gelesenen Strichcodes an einem Produkt geladen wird, zu dem der Modul gehört.

3. Anordnung nach einem der Ansprüche 1 oder 2, dadurch gekennzeichnet, daß sie weiterhin in Verbindung mit der Empfangsschaltung jedes Anzeigemoduls oder jeder Gruppe von Anzeigemodulen mit Einrichtungen (230) zum Aktivieren der Empfangsschaltung (210) im Näherungserfassungsmodus in einem zweiten bestimmten Zeitintervall (X'), das wesentlich kürzer als das erste Zeitintervall (X) ist, versehen ist, und daß jeder Ausgabe von Informationen durch ein tragbares Terminal (300) die Ausgabe eines schnellen Wecksignals vorausgeht, das dann, wenn es durch die Empfangsschaltung während einer Aktivierungsphase bei deren Näherungserfassung erfaßt wird, dazu führt, daß sie ihren aktiven Zustand während der Zeitdauer beibehält, während der Informationen vom tragbaren Terminal ausgegeben werden.

4. Anordnung nach Anspruch 3, dadurch gekennzeichnet, daß die Dauer des schnellen Wecksignals in der Größenordnung des Doppelten des besagten zweiten Zeitintervalls (X') liegt.

5. Anordnung nach einem der Ansprüche 3 und 4, dadurch gekennzeichnet, daß die Dauer des besagten zweiten Zeitintervalls zwischen 0,2 und 5 s liegt.

6. Anordnung nach einem der Ansprüche 1 bis 5, dadurch gekennzeichnet, daß die Empfangsschaltung jedes Anzeigemoduls einen Schwellwertdetektor umfaßt.

7. Anordnung nach einem der Ansprüche 1 bis 6, dadurch gekennzeichnet, daß die Frequenz des niederfrequenten Signals zwischen etwa 30 und 50 kHz liegt.

8. Anordnung nach Anspruch 7, dadurch gekennzeichnet, daß die Frequenz des niederfrequenten Signals zwischen 35 und 45 kHz liegt.

9. Tragbares Terminal, insbesondere zum Übertragen von Informationen zu einem Anzeigemodul für die besagten Informationen und insbesondere zum Anzeigen des Verkaufspreises in einem Geschäft, dadurch gekennzeichnet, daß es
- eine zentrale Verarbeitungseinheit (340), der ein Speicher (342) zugeordnet ist,
- Einrichtungen zum Eingeben von Informationen, die eine Tastatur (320) und einen optischen Strichcodeleser (370) umfassen,
- einen Anzeigebildschirm (330) zum Kontrollieren der besagten Informationen,
- eine Schaltung zum Ausgeben der Informationen, die Einrichtungen (350) zum Modulieren eines niederfrequenten Signals und zum Anlegen des Signals an eine Stromschleife (360) umfaßt, und
- Einrichtungen, um vor der Ausgabe der Informationen ein Wecksignal auszugeben, umfaßt, das dazu geeignet ist, eine Empfangsschaltung eines Moduls zu aktivieren, wenn sich die Stromschleife bis auf einen bestimmten Abstand dem Modul nähert.
